# EUROPEAN PATENT APPLICATION

(11) **EP 2 110 915 A2**
(43) Date of publication of application: **21.10.2009**
(21) Application number: 09157203.2
(22) Date of filing: 02.04.2009
(51) Int. Cl.: H02H 3/00, H02H 3/08

(54) **Current gain control of circuit breaker trip unit**

(30) Priority: 15.04.2008 US 103026
(71) Applicant: GENERAL ELECTRIC COMPANY, Schenectady, NY 12345 (US)
(72) Inventor: Vicente, Nataniel Barbosa, Prospect, KY 40059-8668 (US); Lenhart, Brian Patrick, Louisville, KY 40291-5028 (US); West, Stephen James, Louisville, KY 40220-1224 (US); Greenwood, Todd, Pewee Valley, KY 40056-9079 (US); Hameed, Zubair, Louisville, KY 40241-4844 (US); Devarapalli, Sreenivasulu R., Louisville, KY 40245-5270 (US)
(74) Representative: Illingworth-Law, William Illingworth

(57) **Abstract**

An electronic trip unit (100) for a circuit breaker, the electronic trip unit (100) includes a rating plug (110) having a plurality of switches (SW1, SW2, SW3, SW4, SW5, SW6, SW7, SW8) each configured to indicate a specified current rating for the rating plug (110) and for selectively supplying a current rating for the electronic trip unit (100), a processing unit (140) which receives and reads a value of the selected current rating from the rating plug (110) upon power-up, and a gain control unit (120) including a plurality of gain circuits (122). Each of the gain circuits (122) including a plurality of gain switches (124) set by the processing unit (140) based upon the selected current rating, to control a gain of input current of the electronic trip unit (100).

## Description

### BACKGROUND

This invention relates to a circuit breaker trip unit. More particularly, this invention relates to current gain control of a microprocessor-controlled circuit breaker trip unit.

Generally, microprocessor-controlled circuit breaker trip units automatically operate the circuit breaker under fault current conditions. The circuit breaker trip unit provides protection for cables, motors and other loads by measuring electrical current and simulating the heating of the cables, motors and loads. Current sensing systems for the trip units employ a current sensor in each phase and in the neutral, if used. The microprocessor-controlled trip unit trips to open the electrical circuit, and therefore, interrupts current flow in certain cases. The trip unit records the current flowing through a circuit breaker or motor overload relay via the current sensors, phase amplifiers and an A/D converter. The current sensors also provide power to the trip unit. The existing trip unit employs a rating plug having a set of resistors including predetermined resistor values which set a current rating (i.e., gain) which is maximum continuous current permitted in the electronic circuit for each individual phase with a rating value which is read by a microprocessor of the trip unit during a power-up operation. The circuit breaker remains closed as long as the current remains below a specified protection rating (i.e., long-time, short-time, or instantaneous, for example). The circuit breaker is configured to provide a desired type of protection for the electrical circuit. Therefore, modification of the protection rating is very important and should be handled appropriately.

There are several disadvantages associated with the conventional microprocessor-controlled circuit breaker trip unit. One disadvantage is that by using the existing rating plug, additional configuration is required and there are reliability concerns due to the high impedance associated with the gain circuit. Another disadvantage is that noise and quantization errors are an issue in existing trip units. A quantization error occurs near the lower signal levels when an analog value assumes a digital value that is near the increment of each individual A/D value.

### BRIEF DESCRIPTION

An exemplary embodiment of the present invention provides an electronic trip unit of a circuit breaker. The electronic trip unit includes a rating plug having a plurality of switches each configured to indicate a specified current rating for the rating plug and for selectively supplying a current rating for the electronic trip unit, a processing unit which receives and reads a value of the selected current rating from the rating plug upon power-up, and a gain control unit including a plurality of gain circuits. Each of the gain circuits including a plurality of gain switches set by the processing unit based upon the selected current rating, to control a gain of input current of the electronic trip unit.

Another exemplary embodiment of the present invention provides a method of controlling current gain of input current of a circuit breaker trip unit including a rating plug having a plurality of switches, a processing unit and gain circuits. The method includes selecting a specified current rating of the circuit breaker trip unit from the rating plug, reading and determining a value of the specified current rating via the processing unit, setting the gain circuits via the processing unit and controlling the current gain of the input current of the circuit breaker trip unit.

Additional features and advantages are realized through the techniques of exemplary embodiments of the invention. Other embodiments and aspects of the invention are described in detail herein and are considered a part of the claimed invention. For a better understanding of the invention with advantages and features thereof, refer to the description and to the drawings.

### BRIEF DESCRIPTION OF THE DRAWINGS

FIG. 1 is a schematic diagram of an electronic trip unit of a circuit breaker that can be implemented within embodiments of the present invention
FIG. 2 is schematic diagram of a rating plug of the electronic trip unit of FIG. 1 that can be implemented within embodiments of the present invention.

FIG. 3 is a schematic diagram of a gain circuit of the gain control unit of FIG. 1 that can be implemented within embodiments of the present invention.

FIGS. 4A and 4B are schematic diagrams of the gain circuit of the gain control unit of FIG. 1 that can be implemented within embodiments of the present invention.

### DETAILED DESCRIPTION

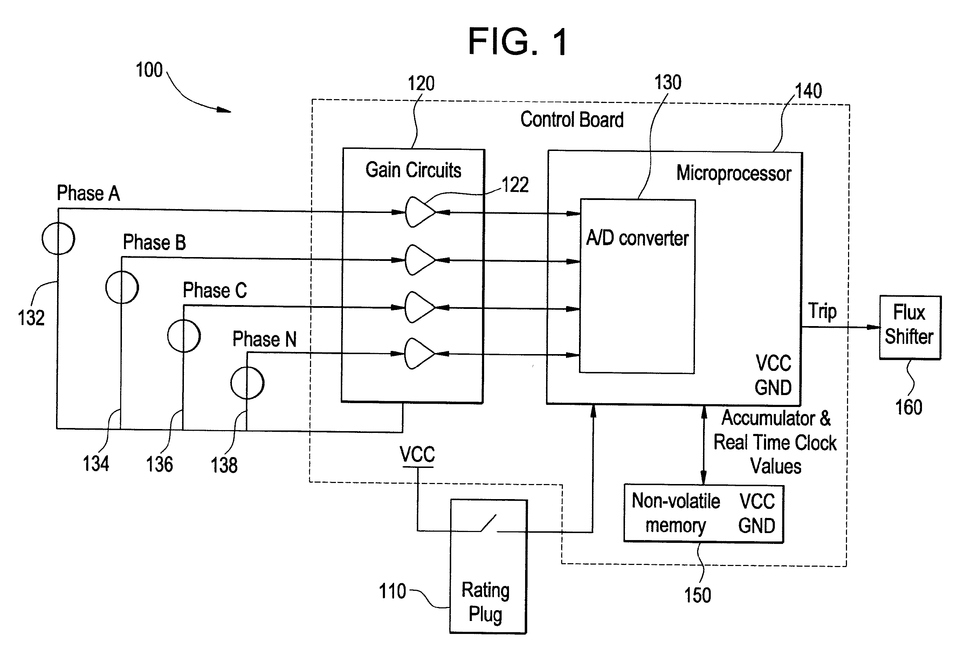

Turning now to the drawings in greater detail, it will be seen that in FIG. 1, there is an electronic trip unit 100 for a three-phase circuit breaker having a neutral connection, the present invention is not limited hereto and may vary, as necessary. Secondary current signals from four current sensors (not shown) are in communication with a gain control unit 120 via conductors 132, 134, 136 and 138. According to an exemplary embodiment, the current sensors may be a current transformer providing an alternate secondary current output which is proportional to the primary current flowing through the circuit breaker or a Rogowski sensor which provides a derivative secondary voltage output proportional to a high level primary current flowing through the circuit breaker.

In the current exemplary embodiment, as shown in FIG. 1, the electronic trip unit 100 comprises a rating plug 110 coupled with the electronic trip unit 100, a processing unit (hereinafter referred to as a microprocessor) 140 and a gain control unit 120. The gain control unit 120, the microprocessor 140 and a non-volatile memory 150 are disposed on a control board.

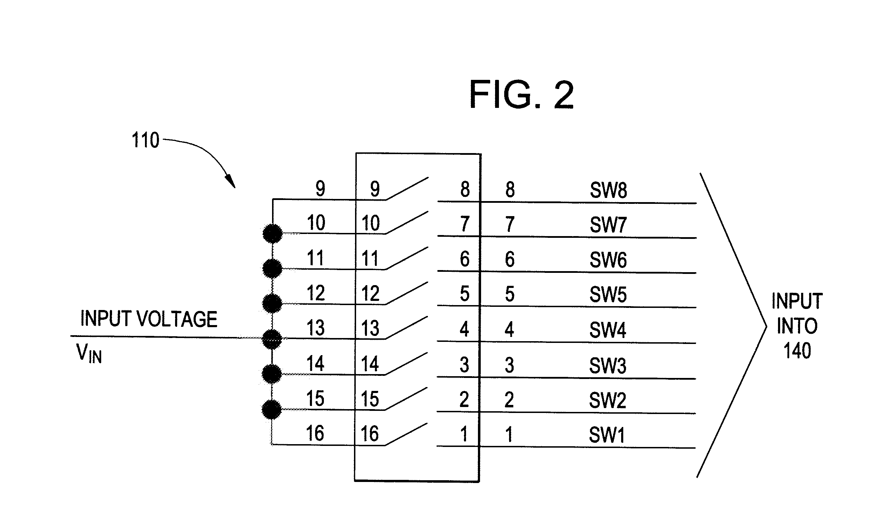

FIG. 2 is a schematic diagram of the rating plug of the electronic trip unit 100 of FIG. 1. As shown in FIG. 2, the rating plug 110 is provided with an input voltage Vᵢₙ to energize the rating plug 110 and the rating plug 110 comprises a plurality of switches SW1, SW2, SW3, SW4, SW5, SW6, SW7 and SW8 each configured to indicate a specified current rating for the rating plug 110. That is, according to an exemplary embodiment, the switches SW1, SW2, SW3, SW4, SW5, SW6, SW7 and SW8 are preprogrammed at the time of manufacture. The number of switches of the rating plug 110 is not limited to any particular number and may vary, as necessary. The rating plug 110 selectively supplies a specified current rating for the electronic trip unit 100.

Referring back to FIG. 1, the selected current rating is fed to an input of the microprocessor 140. The microprocessor 140 receives and reads a value of the selected current rating from the rating plug 110 upon power-up.

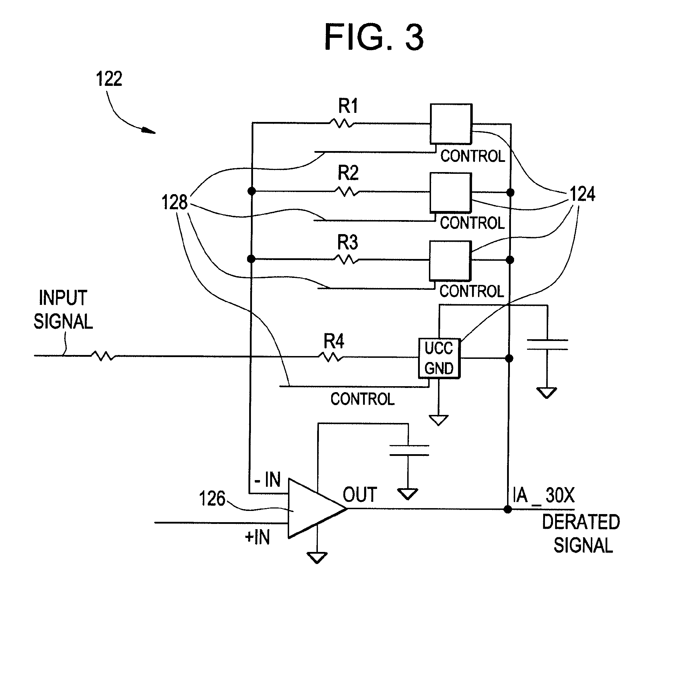

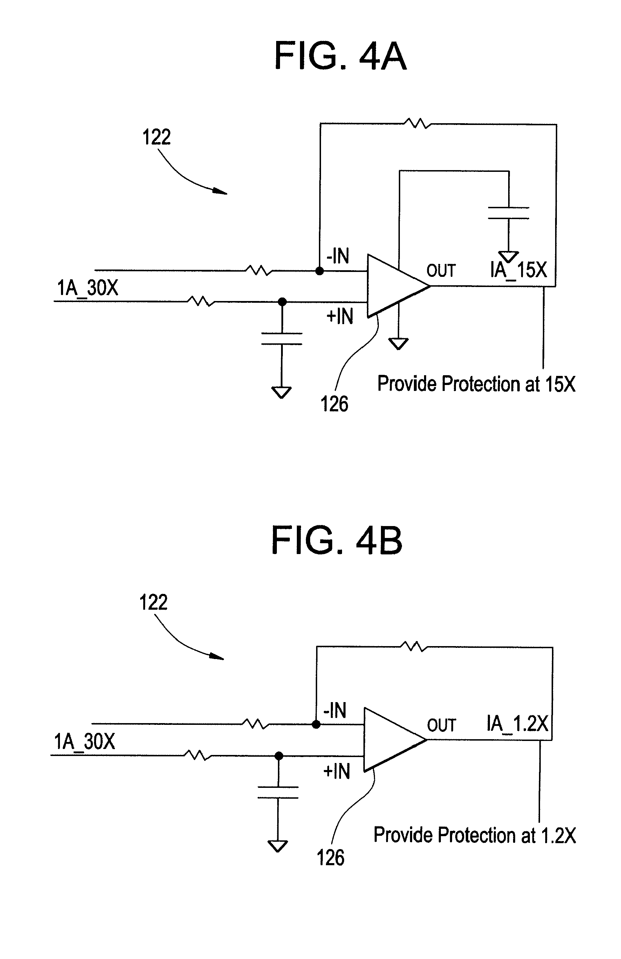

According to an exemplary embodiment, the gain control unit 120 comprises a plurality of gain circuits 122 for each phase of the circuit breaker. Each gain circuit 122 includes a plurality of gain switches 124 (depicted in FIGS.3 and 4) which are set by the microprocessor 140 based upon the selected current rating read from the rating plug 110, to control a gain of input current of the electronic trip unit 100.

According to an exemplary embodiment, the microprocessor 140 comprises an analog-to-digital (A/D) converter 130 receives signals from the gain control unit 120 and converts the secondary current levels output from the current sensors from analog signals to digital signals to be analyzed by the microprocessor 140.

The gain circuits 122 amplifies each phase signal for phases A, B and C through sections of the respective gain circuits 122, from which the microprocessor 140 measures each amplified signal using the A/D converter 130. The gain control unit 120 also filters electric noise from the signals and minimizes quantization errors.

According to an exemplary embodiment, an accumulator (not shown) is incremented and decremented based on whether the input current (i.e., the secondary current levels) exceeds or falls beneath a specified value for a predetermined period of time. Therefore, the accumulator represents a heating effect on a load. Thus, the microprocessor 140 determines whether the send a trip signal to a flux shifter 160, based on the value of the accumulator. The flux shifter 160 is an electromechanical device that when energized by a trip signal causing the circuit breaker to open or trip. That is, the microprocessor 140 provides a trip signal to the flux shifter 160 when current and/or voltage flowing through the circuit breaker exceeds a predetermined threshold. In response to the microprocessor 140 sending a trip signal, the microprocessor also sends the accumulator value and a real-time value of a real-time clock (not shown) to the non-volatile memory 150, which maintains the data in the absence of power. According to an exemplary embodiment, the non-volatile memory 150 stores set-points and parameters of the electronic trip unit 100.

FIG. 3 is a schematic diagram of a gain circuit of the gain control unit of FIG. 1. FIGS. 4A and 4B are schematic diagrams of a gain circuit of the gain control unit. FIGS. 3, 4A and 4B respectively illustrate a gain circuit at three different protection levels. As shown in FIG. 3, each gain circuit 122 of the gain control unit 120 comprises a series of resistors R1, R2, R3 and R4, a plurality of gain (i.e., analog) switches 124 and an operational amplifier (hereinafter referred to as a gain amplifier) 126. The gain switches 122 are configured to be selectively enabled and disabled by the microprocessor 140 based on the current rating read by the microprocessor 140, to control the gain of the input current of the electronic trip unit 100. This active gain manipulation of the input current is referred to as "derating". More specifically, derating occurs because rating plug values are equal to or below a maximum rating of the circuit breaker. For example, if a circuit breaker is rated at 1000 Amps, a customer may select a rating plug value at or below that value. In this example, a 500 Amp rating plug is selected. The derating value would be 50% and the corresponding gain of 2 would be required to maximize analog to digital conversion in the microprocessor 140.

According to an exemplary embodiment of the present invention, there are 15 different gain combinations which may be utilized.

Further, the microprocessor 140 controls the gain switches 124 by supplying a control signal 128 to the respective gain switches 124. That is, the microprocessor 140 determines which gain switches 124 of the plurality of gain switches 124 to enable and disable based upon the selected current rating, to appropriately set the gain switches 124 to a corresponding protection rating. In addition, a gain of the gain amplifier 126 is controlled by the microprocessor 140 via signals received from the gain switches 124 and a control signal received from the microprocessor 140. A derated signal corresponding to a protection level 30 times the input current is output from the gain amplifier 126 is fed into the A/D converter 130 of the microprocessor 140 as shown in FIG. 1.

In FIGS. 4A and 4B, the gain circuits 122 respectively output a derated signal corresponding to a protection level at 15 times the input current and 1.2 times the input current, to be supplied to back to the microprocessor 140. Due to microprocessor constraints and quantization error, the signal must be divided into multiple levels. These levels reduce quantization error and provide better protection for the circuit breaker. Specifically, FIG 4A inputs the derated 30X signal and outputs a larger 15X signal and FIG 4B inputs the same derated 30X signal and outputs the largest signal of 1.2X current. According to an exemplary embodiment, the protection level is not limited to be any particular number times the input current, and may vary, as necessary.

Referring back to FIG. 1, the A/D converter 130 of the microprocessor 140 receives the derated signal from the gain circuits 122 and thereby controls the gain of the input current. According to an exemplary embodiment of the present invention, the derated signal read by the A/D converter 130 of the microprocessor 140 is maximized to reduce both the effect of noise and quantization error.

According to an exemplary embodiment, the present invention provides an advantage of controlling the current gain of input current of the electronic trip unit 100 for a corresponding protection level based on a specified current rating read by the microprocessor 140.

According to an exemplary embodiment of the present invention provides an advantage in that the protection pick-up level is increased to a very high level (i.e., 20 times, for example), by maximizing the input current signal through the gain switches 124 employed to reduce error. By reading a rating plug switch, SW1 through SW8, determining its corresponding rating value and then setting the gain switches 124 to the appropriate setting, maximum signal for each gain stage is obtained and a protection rating is maximized.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. An electronic trip unit (100) for a circuit breaker, the trip unit (100) comprising:
a rating plug (110) comprising a plurality of switches (SW1, SW2, SW3, SW4, SW5, SW6, SW7, SW8) each configured to indicate a specified current rating for the rating plug (110) and for selectively supplying a current rating for the electronic trip unit (100);
a processing unit (140) which receives and reads a value of the selected current rating from the rating plug (110) upon power-up; and
a gain control unit (120) comprising a plurality of gain circuits (122), each of the gain circuits (122) comprising a plurality of gain switches (124) set by the processing unit (140) based upon the selected current rating, to control a gain of input current of the electronic trip unit (100).

2. The electronic trip unit (100) of claim 1, wherein the processing unit comprises:
an analog-to-digital converter (130) which receives an output signal from the gain control unit (120) and converts the input current, from analog signals to digital signals.

3. The electronic trip unit (100) of claim 1 or claim 2, wherein the processing unit (140) provides a trip signal when current and/or voltage flowing through the circuit breaker exceeds a predetermined threshold.

4. The electronic trip unit (100) of any one of the preceding claims, wherein the plurality of gain circuits (122) comprises a plurality of gain circuits (122) for each phase of the circuit breaker.

5. The electronic trip unit of claim 4, wherein the plurality of gain switches (124) for each gain circuit (122) are configured to be enabled and disabled by the processing unit (140) to control the gain of the input current of the trip unit (100).

6. The electronic trip unit (100) of claim 5, wherein each of the gain circuits (122) further comprises:
an operational amplifier (126) having a gain controlled by the processing unit (140) based upon the selected current rating.

7. The electronic trip unit of any one of the preceding claims, further comprising a non-volatile memory which stores set-points and parameters of the electronic trip unit.

8. The electronic trip unit of claim 6, wherein the rating plug controls a gain of the operational amplifier.

9. The electronic trip unit (100) of claim 5, wherein the processing unit (140) selectively enables and disables the gain switches (124) of the gain circuit (122) which set the gain of the input current of the electronic trip unit (100).

10. The electronic trip unit (100) of claim 9, wherein a protection rating of the circuit breaker is set based upon a specified current rating of the rating plug (110) read by the processing unit (140).

11. The electronic trip unit (100) of claim 10, wherein the processing unit (140) determines which gain switches (124) of the plurality of gain switches (124) to enable and disable by supplying a control signal (128) to the respective gain switches (124) based upon the selected current rating, to appropriately set the gain switches (124) to a corresponding desired protection rating.

12. The electronic trip unit (100) of claim 11, wherein a derated signal corresponding to the desired protection rating is output from the operational amplifier (126) and supplied back to the processing unit (140), thereby controlling the gain of the input current.

13. A method of controlling current gain of input current of a circuit breaker trip unit including a rating plug having a plurality of switches, a processing unit and gain circuits, the method comprising:
selecting a specified current rating of the circuit breaker trip unit from the rating plug;
reading and determining a value of the specified current rating via the processing unit;
setting the gain circuits via the processing unit to control the current gain of the input current of the circuit breaker trip unit.

14. The method of claim 13, wherein setting the gain circuits comprises:
enabling and disabling gain switches of the gain circuits via the processing unit based upon the determined value of the specified current rating read by the processing unit.

15. The method of claim 13 or claim 14, further comprising at least one of:
setting a protection rating of the circuit breaker based upon the specified current rating read by the processing unit;
selectively setting the gain switches via the processing unit to correspond to the set protection rating; and
outputting a derated signal from the gain circuits; and
supplying the derated signal to the processing unit.
